# EUROPÄISCHE PATENTSCHRIFT

(11) **EP 3 122 596 B1**
(45) Veröffentlichungstag und Bekanntmachung des Hinweises auf die Patenterteilung: **16.11.2022**
(21) Anmeldenummer: 15716408.8
(22) Anmeldetag: 05.03.2015
(51) Int. Cl.: B60Q 1/50, B60R 13/00, E05B 81/78, E05B 83/18, E05B 17/10, E05F 15/73

(54) **BEDIENELEMENT MIT EINEM BELEUCHTUNGSELEMENT FÜR EIN FAHRZEUG**
OPERATING DEVICE WITH AN ILLUMINATION DEVICE FOR A VEHICLE
DISPOSITIF DE COMMANDE AVEC UN DISPOSITIF D'ÉCLAIRAGE POUR VÉHICULE

(30) Priorität: 26.03.2014 DE 102014004334
(43) Veröffentlichungstag der Anmeldung: 01.02.2017
(73) Patentinhaber: Huf Hülsbeck & Fürst GmbH & Co. KG, 42551 Velbert (DE)
(72) Erfinder: BUSCHMANN, Gerd, 42553 Velbert (DE); METZNER, Thomas, 71088 Holzgerlingen (DE); KLAMETH, Markus, 71155 Altdorf (DE)
(86) Internationale Anmeldenummer: PCT/DE2015/100087
(87) Internationale Veröffentlichungsnummer: WO 2015/144128

(56) Entgegenhaltungen:
- EP-A1- 2 067 665
- WO-A1-2015/043808
- DE-A1-102007 002 024
- DE-A1-102012 004 742
- US-A1- 2003 216 817
- US-A1- 2010 007 463

## Beschreibung

Die Erfindung betrifft ein Bedienelement für eine Vorrichtung zum Öffnen oder Entriegeln eines Fahrzeugs, umfassend ein Beleuchtungselement.

Aus der DE 10 2004 050 297 A1 ist eine Anordnung für Kraftfahrzeugs mit einer Kamera zur Bilderfassung, mit einem Gehäuse, mit einem schwenkbaren Schutzelement und mit einem Antrieb bekannt. Mit dem Antrieb ist das Schutzelement in eine die Kamera in dem Gehäuse verdeckende erste Stellung, in der die Kamera deaktiviert ist, und in eine zweite Stellung, in der die Kamera aktivierbar ist, schwenkbar und umgekehrt. Hierbei weist die Anordnung einen Schließzyiinder eines Verschlusses für einen Deckel oder eine Haube des Kraftfahrzeugs auf. Weiterhin weist die Anordnung einen Schalter eines Verschlusses für einen Deckel oder eine Haube des Kraftfahrzeugs auf, wobei der Schalter Teil des Verschlusses des Deckels ist.

Ein Bedienelement für eine Vorrichtung zum Öffnen oder Entriegeln eines Fahrzeugs, umfassend ein Beleuchtungselement und zumindest einen Sensor zur Erfassung von Bewegungen eines Nutzers, ist aus der US 2010/007463 A1 bekannt.

Der Erfindung liegt die Aufgabe zu Grunde, ein neuartiges Bedienelement für eine Vorrichtung zum Öffnen oder Entriegeln eines Fahrzeugs anzugeben.

Die Aufgabe wird durch die im Anspruch 1 angegebenen

Merkmale gelöst. Vorteilhafte Ausgestaltungen der Erfindung sind Gegenstand der Unteransprüche.

Das Beleuchtungselement umfasst erfindungsgemäß folgende Komponenten:
- ein äußeres Zierteil,
- ein Leuchtmittel und
- eine zwischen dem Zierfeil und dem Leuchtmittel angeordnete transparente Abdeckanordnung,
- eine lackierte Lamellenanordnung, die auf der Abdeckanordnung angeordnet ist und die vom Zierteil nicht bedeckte Zwischenräume der Abdeckanordnung derart abdeckt, dass bei einer Beleuchtung der Abdeckanordnung mittels des Leuchtmittels erzeugtes Licht im Bereich von Kanten des Zierteils ausgekoppelt wird.

Das Beleuchtungselement zeichnet sich durch einen besonders geringen Bauraumbedarf aus.

Ausführungsbeispiele der Erfindung werden im Folgenden anhand von Zeichnungen näher erläutert.

Dabei zeigen:
- Fig. 1: schematisch eine perspektivische Ansicht eines ersten Ausschnitts eines erfindungsgemäßen Fahrzeugs mit einem erfindungsgemäßen Bedienelement,
- Fig. 2: schematisch eine perspektivische Ansicht eines zweiten Ausschnitts des erfindungsgernäßen Fahrzeugs mit dem erfindungsgemäßen Bedienelemente,
- Fig, 3: schematisch eine Explosionsdarsieilung des zweiten Ausschnitts des erfindungsgemäßen des Fahrzeugs mit dem erfindungsgemäßen Bedienelement, und
- Fig. 4: schematisch eine Schnittdarstellung eines Teils eines Beleuchtungselements des Bedienelements,

Einander entsprechende Teile sind in allen Figuren mit den gleichen Bezugszeichen versehen.

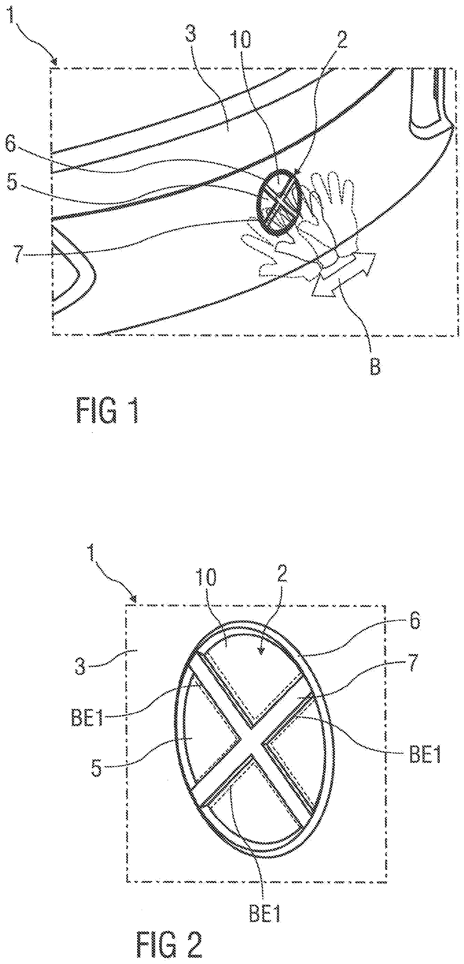

In den Figuren 1 bis 3 sind in verschiedenen Ansichten Ausschnitte eines Fahrzeugs 1 mit einem erfindungsgemäßen Bedienelement 2 dargestellt.

Das Bedienelement 2 ist hierbei Bestandteil einer nicht näher dargestellten Vorrichtung zum Öffnen oder Entriegeln des Fahrzeugs 1 und ist in einem Ausschnitt A eines Heckdeckels 3 des Fahrzeugs 1 integriert. Dabei ist das Bedienelement 2 mit einer als so genannte Schließplatte ausgebildeten Schließanordnung 4 der Vorrichtung zum Öffnen oder Entriegeln des Fahrzeugs 1 gekoppelt. Die Schließanordnung 4 ist beispielsweise aus Polycarbonat oder Acrylnitril-Butadien-Styroi-Copolymerisaf (kurz ABS) gebildet.

Das Bedienelement 2 umfasst in nicht näher dargestellter Weise zumindest einen Sensor, beispielsweise einen kapazitiven Sensor, zur Erfassung von Bewegungen B, beispielsweise Handbewegungen, eines Nutzers, wobei mittels des Sensors ein Steuersignal erzeugt wird, anhand weichem mittels der Vorrichtung zum Öffnen oder Entriegeln des Fahrzeugs 1 eine Zentralverriegelung betätigt und/oder eine Tür oder Klappe, beispielsweise der Heckdeckel 3, automatisch geöffnet wird. Dabei ist der Sensor insbesondere mit einer Auswerteeinheit gekoppelt, mittels weicher die vom Sensor erfassten Bewegungen B ausgewertet werden und in Abhängigkeit erkannter definierter Gesten werden diesen Gesten zugeordnete Funktionen der Vorrichtung zum Offnen oder Entriegeln des Fahrzeugs 1 ausgeführt.

Somit ist mittels des Bedienelements 2 ein berührungsloses Bedienen der Vorrichtung zum Öffnen oder Entriegeln des Fahrzeugs 1 für den Nutzer möglich, so dass eine Verschmutzung der Hände des Nutzers vermieden werden kann.

Weiterhin umfasst das Bedienelement 2 ein Beleuchtungselement 5, wobei mittels des Beleuchtungselements 5 in Abhängigkeit einer aufgrund der Bewegung B des Nutzers, insbesondere Handbewegung, von der Vorrichtung ausgeführten Funktion ein die Funktion signalisierendes oder ein einen von der Funktion eingestellten Zustand der Vorrichtung signalisierendes Lichtsignal erzeugt wird.

Insbesondere wird von dem Beleuchtungselement 5 ein Lichtsignal ausgegeben, welches dem Nutzer eine Rückmeldung über die aufgrund seiner Bewegung B durchgeführte Funktion gibt. Beispielsweise wird dem Nutzer beim Öffnen der Zentralverriegelung, einer Tür oder einer Klappe ein Lichtsignal mit einer grünen Farbe ausgegeben. Beim Verschluss der Zentralverriegelung erfolgt die Ausgabe des Lichtsignals beispielsweise in der Farbe Rot. Das heißt, mittels des Beleuchtungselements 5 sind in Abhängigkeit eines Öffnungs- und Schiießvorgangs unterschiedliche Lichtfarben ausgebbar. Auch sind mittels des Beleuchtungseiements 5 so genannte "Coming-Home-Beieuchtungen" realisierbar.

Das Beleuchtungselernent 5 umfasst ein äußeres Zierteil 6, welches ein beispielsweise aus Polycarbonat oder Acrylnitril-Butadien-Styrol-Copolymehsat (kurz ABS) gebildetes Herstelleremblem 7 umfasst. Das Herstelleremblem 7 ist dabei nur stilisiert dargestellt und kann abweichend jede denkbare Form aufweisen. Das Zierteil 6 ist dabei zumindest an einer Sichtseite verchromt ausgebildet und kann in nicht näher dargestellter Weise mit einer transparenten Abdeckung versehen sein.

Weiterhin umfasst das Beleuchtungseiernent 5 ein Leuchtmittel 8 weiches beispielsweise eine oder mehrere Leuchtdioden, insbesondere organische Leuchtdioden, so genannte OLEDs, umfasst. Das Leuchtmittel 8 ist rückseitig von einer beispielsweise aus Polycarbonat oder Acrylnitril-Butadien-Styrol-Copolymerisat (kurz ABS) gebildeten Abschiussanordnung 11 gehalten.

Zwischen dem Zierteil 6 und dem Leuchtmittel 8 ist eine beispielsweise aus Polymethylmethacryiat gebildete transparente Abdeckanordnung 9 angeordnet. In abweichenden Ausführungsbeispielen kann die Abdeckanordnung 9 auch lediglich transluzent ausgebildet sein.

Auf der Abdeckanordnung 9 ist eine so genannte, beispielsweise ebenfalls aus Polycarbonat oder Acrylnitril-Butadien-Styroi-Copolymerisat (kurz ABS) gebildete, Lamellenanordnung 10 angeordnet, welche insbesondere die gleiche Außenfarbe wie das Fahrzeug 1 aufweist. Die Lamellenanordnung 10 ist lackiert. Die Lamellenanordnung 10 ist derart ausgebildet, dass von dem Herstelleremblem 7 nicht bedeckte Zwischenräume der Abdeckanordnung 9 derart abgedeckt werden, dass bei einer Beleuchtung der Abdeckanordnung 9 mittels des Leuchtmittels 8 erzeugtes Licht im Bereich BE1 von Kanten des Herstelleremblems 7 auskoppelbar ist. Das heißt, es wird eine Silhouette des Herstellerembiems 7 beleuchtet und somit optisch hervorgehoben. In nicht dargestellten Ausführungsbeispielen sind auch abweichende Ausbildungen und Ausformungen der Lamellenanordnung 10 möglich: so dass beliebige Lichtbilder erzeugt werden können.

Alle Komponenten des Bedienelements 2 und des Beleuchtungselements 5 sind kraft-, stoff- und oder formschlüssig miteinander verbunden, beispielsweise verklebt und/oder lasergeschweißt.

Das Bedienelement 2 ermöglicht es, dem Bediener mittels der erzeugten Lichtsignale eine Rückmeldung über die ausgeführten Funktionen zu geben. Aufgrund dessen, dass keine mechanisch bewegten Bauteile zur Aktivierung der Schließ- und Öffnungsfunktion erforderlich sind, zeichnet sich das Bedienelement 2 gegenüber aus dem Stand der Technik bekannten Lösungen durch einen besonders geringen Bauraurnbedarf aus. Auch ist das Bedieneleroent 2 sehr einfach und optisch ansprechend in die Außenhaut oder in den Innenraum des Fahrzeugs 1 integrierbar.

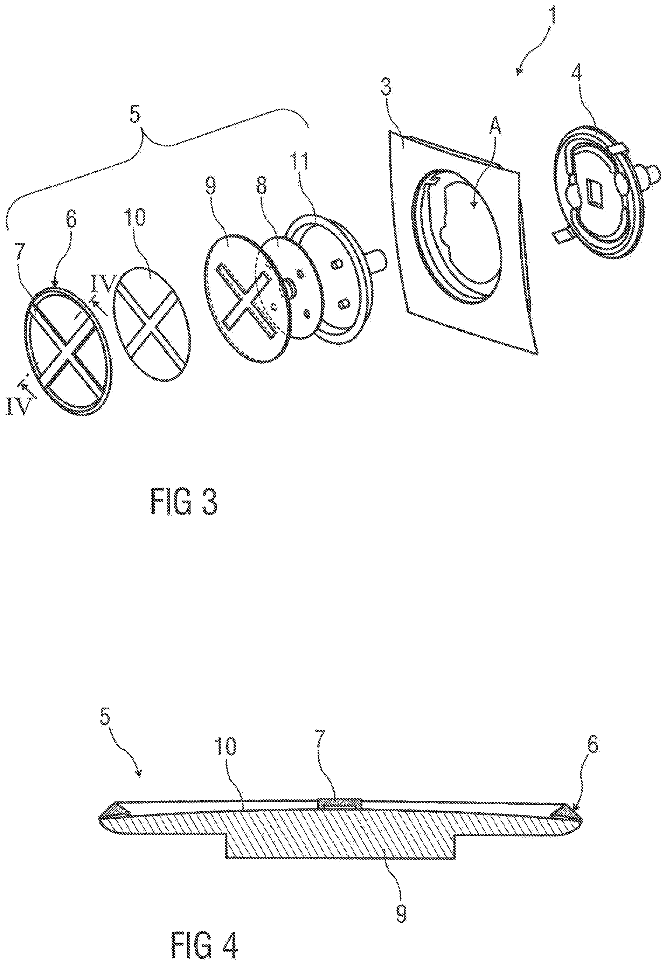

Figur 4 zeigt eine Schnittdarstellung eines Teils des Beleuchtungselements 5 des Bedienelements 2.

### Bezugszeichenliste

- 1: Fahrzeug
- 2: Bedieneiement
- 3: Heckdeckel
- 4: Schließanordnung
- 5: Beleuchtungselement
- 6: Zierteil
- 7: Herstelleremblem
- 8: Leuchtmittel
- 9: Abdeckanordnung
- 10: Lamellenanordnung
- 11: Abschlussanordnung

- A: Ausschnitt
- B: Bewegung
- BE1: Bereich

## Patentansprüche

1. Bedienelement (2) für eine Vorrichtung zum Öffnen oder Entriegeln eines Fahrzeugs (1), umfassend ein Beleuchtungselement (5) und zumindest einen Sensor zur Erfassung von Bewegungen (B) eines Nutzers, wobei mittels des Beleuchtungselements (5) in Abhängigkeit einer aufgrund von
Bewegungen (B) des Nutzers von der Vorrichtung ausgeführten Funktion ein die Funktion signalisierendes oder ein einen von der Funktion eingestellten Zustand der Vorrichtung signalisierendes Lichtsignal erzeugbar ist, **dadurch gekennzeichnet, dass** das Beleuchtungselement (5) folgende Komponenten umfasst:
- ein äußeres Zierteil (6),
- ein Leuchtmittel (8) und
- eine zwischen dem Zierteil (6) und dem Leuchtmittel (8) angeordnete transparente Abdeckanordnung (9).,
- eine lackierte Lamellenanordnung (10), die auf der Abdeckanordnung (9) angeordnet ist und vom Zierteil (6) nicht bedeckte Zwischenräume der Abdeckanordnung (9) derart abdeckt, dass bei einer Beleuchtung der Abdeckanordnung (9) mittels des Leuchtmittels (8) erzeugtes Licht im Bereich (BE1) von Kanten des Zierteils (6) ausgekoppelt wird.

2. Bedienelement (2) nach Anspruch 1: **dadurch gekennzeichnet, dass** mittels Leuchtmittels (8) Licht in unterschiedlichen Lichtfarben erzeugbar ist.

3. Bedienelement (2) nach einem der vorhergehenden Ansprüche, **dadurch gekennzeichnet, dass** das Zierteil (6) ein Herstelleremblem (7) umfasst.

4. Bedienelement (2) nach einem der vorhergehenden Ansprüche, **dadurch gekennzeichnet, dass** das Zierteil (6) zumindest an einer Sichtseite verchromt ausgebildet ist.

## Claims

1. Operating element (2) for an apparatus for opening or unlocking a motor vehicle (1), comprising a lighting element (5) and at least one sensor for detecting movements (B) of a user, wherein depending on a function that is performed by the apparatus in response to movements (B) of the user a light signal signalling the function or signalling a state set by the function can be generated by means of the lighting element (5), **characterized in that** the lighting element (5) comprises the following components:
- an external decorative part (6),
- a light source (8) and
- a transparent cover assembly (9) arranged between the decorative part (6) and the light source (8),
- a coated slat arrangement (10), which is arranged on the cover assembly (9) and covers spaces of the cover assembly (9) that are not covered by the decorative part (6) in such manner that when the cover assembly (9) is illuminated, light generated by the light source (8) is decoupled by edges of the decorative part (6) in the region (BE1).

2. Operating element (2) according to Claim 1, **characterized in that** light can be generated in different light colours by means of light source (8) .

3. Operating element (2) according to any one of the preceding claims, **characterized in that** the decorative part (6) comprises a manufacturer's emblem (7).

4. Operating element (2) according to any one of the preceding claims, **characterized in that** the decorative part (6) is chromed at least on a visible side.

## Revendications

1. Elément de commande (2) pour un dispositif destiné à ouvrir ou déverrouiller un véhicule (1), comprenant un élément d'éclairage (5) et au moins un capteur pour saisir des mouvements (B) d'un utilisateur, sachant qu'au moyen de l'élément d'éclairage (5), un signal lumineux peut être généré en fonction d'une fonction exécutée par le dispositif sur la base des mouvements (B) de l'utilisateur, signalisant la fonction ou signalisant un état du dispositif mis en œuvre par la fonction, **caractérisé en ce que** l'élément d'éclairage (5) comprend les composants suivants :
- une pièce enjoliveuse extérieure (6),
- un moyen d'éclairage (8) et
- un système de couverture transparent (9) disposé entre la pièce enjoliveuse (6) et le moyen d'éclairage (8),
- un système à lamelles (10) laqué, qui est disposé sur le système de couverture (9) et recouvre les espaces intermédiaires du système de couverture (9) non couverts par la pièce enjoliveuse (6) de telle manière que lors d'un éclairage du système de couverture (9) au moyen du moyen d'éclairage (8) la lumière produite est découplée dans la zone (BE1) par les bords de la pièce enjoliveuse (6).

2. Elément de commande selon la revendication 1, **caractérisé en ce que** de la lumière peut être produite en couleurs d'éclairage différentes au moyen d'un moyen d'éclairage (8).

3. Elément de commande (2) selon l'une quelconque des revendications précédentes, **caractérisé en ce que** la pièce enjoliveuse (6) comprend un emblème de fabricant (7).

4. Elément de commande (2) selon l'une quelconque des revendications précédentes, **caractérisé en ce que** la pièce enjoliveuse (6) est constituée chromée au moins sur un côté visible.
